# EUROPEAN PATENT APPLICATION

(11) **EP 3 216 693 A1**
(43) Date of publication of application: **13.09.2017**
(21) Application number: 16382106.9
(22) Date of filing: 10.03.2016
(51) Int. Cl.: B64C 3/28, B64C 21/06, B64D 45/00

(54) **AIRCRAFT AERODYNAMIC SURFACE WITH A DETACHABLE LEADING EDGE**

(71) Applicant: Airbus Operations, S.L., 28906 Getafe (Madrid) (ES)
(72) Inventor: CEBOLLA GARROFE, Pablo, 28906 GETAFE (Madrid) (ES); VÉLEZ DE MENDIZÁBAL ALONSO, Iker, 28906 GETAFE (Madrid) (ES); CRESPO PEÑA, Soledad, 28906 GETAFE (Madrid) (ES); CALERO CASANOVA, Álvaro, 28906 GETAFE (Madrid) (ES); GARCÍA NIETO, Carlos, 28906 GETAFE (Madrid) (ES); GUINALDO, Enrique, 28906 GETAFE (Madrid) (ES); HONORATO RUIZ, Francisco, Javier, 28906 GETAFE (Madrid) (ES); TORRES SALAS, Álvaro, 28906 GETAFE (Madrid) (ES)
(74) Representative: Herrero & Asociados, S.L.

(57) **Abstract**

The invention refers to an aircraft aerodynamic surface (10) comprising a torsion box having an upper skin (11), a lower skin (12), and a front spar (9), and a leading edge (1) having an external shell (7) and an impact resisting structure (8). The external shell (7) may be shaped with an aerodynamic leading edge profile, being configured to provide Laminar Flow Control (LFC) to the leading edge. The impact resisting structure (8) is spanwise arranged between the external shell (7) and the front spar (9), and is configured for absorbing a bird strike to prevent damage in the front spar (9). Also, at least one of the external shell (7) and the impact resisting structure (8) is fitted with the upper and lower skins (11, 12) of the torsion box to thereby facilitate leading edge exchange.

## Description

### Object of the invention

The present invention refers to an aircraft aerodynamic surface with a detachable leading edge configuration so as to provide an aerodynamic surface with dissociated functionalities.

An object of the present invention is to provide an aerodynamic surface for an aircraft with dedicated and improved components for its aerodynamic and structural functionalities.

Another object of the present invention is to provide an aerodynamic surface for an aircraft that is easily interchangeable to facilitate the maintainability and reparability of the same.

Another object of the present invention is to provide an aerodynamic surface for an aircraft that minimizes the cost and damage in a bird strike event.

### Background of the invention

Bird-plane collisions during flight, take-off and landing happen every day, jeopardizing people and aircraft integrity.

Certification regulations governing certain categories of aircraft require that, in the event of damage to a component caused by collision with a bird, the aircraft has to be capable of maintaining flight long enough to reach a landing site.

For that, conventional aircraft lifting surfaces are configured to both withstand the bird strikes and fulfilling the aerodynamic requirements.

This integration of these both functionalities results in a secured, but complicated attachment to the aircraft.

Aircraft aerodynamic surfaces, such as wings or stabilizers (a Horizontal Tail Plane (HTP) or a Vertical Tail Plane (VTP), comprises leading edges typically consisting of outer and inner skins joined by lateral walls forming a cavity system therebetween.

In a bird strike event, these aerodynamic surfaces require a complete replacing of the leading edge, if the skins are bonding to each other, or an outer skin replacing if said outer skin is riveted to the inner skin.

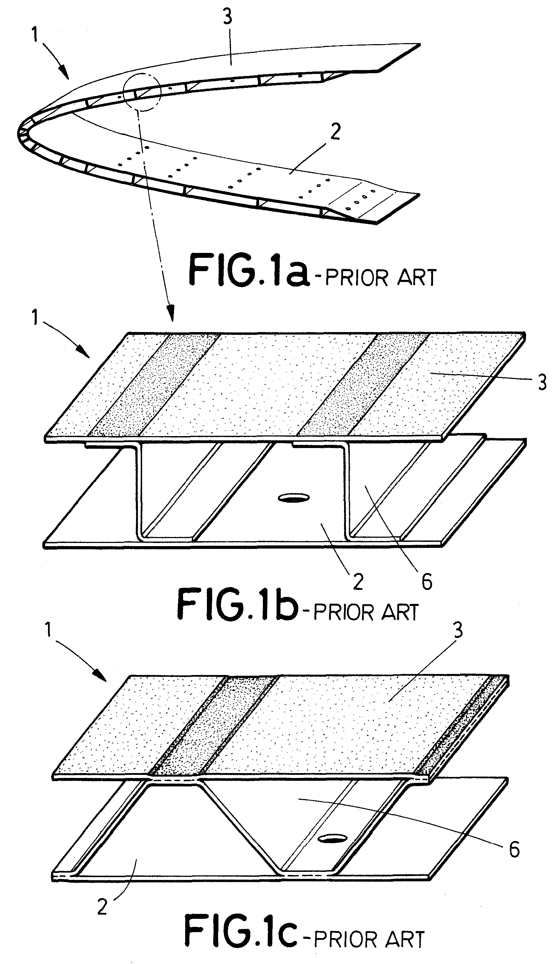

Figure 1 shows different views of a leading edge 1 formed by an outer skin 5, an inner skin 3, and a set of transversal walls 6 fixed to the outer and inner skins 3, 5 at specific locations to form chambers 2 of different sizes. Figure 1a shows a perspective view of the leading edge 1, and Figures 1b and 1c show different transversal walls configurations.

According to this, bird collisions demands long time for interchanging and/or repairing the collided pieces.

Therefore, there is a need for simplifying the reparability and maintainability tasks of the aircraft aerodynamic surfaces in a bird collision event. Also, there is a need for reducing the costs caused by these bird collisions.

### Summary of the invention

The present invention is defined in the attached independent claim, and refers to an aircraft aerodynamic surface, such as a wing or a stabilizer (HTP or VTP), having a detachable leading edge.

The invention refers to an aircraft aerodynamic surface comprising a torsion box having an upper skin, a lower skin, and a front spar, and a leading edge having an external shell and an impact resisting structure.

The external shell is shaped with an aerodynamic leading edge profile. The impact resisting structure is spanwise arranged between the external shell and the front spar of the aerodynamic surface, and it is configured for absorbing a bird strike.

Thus, the external shell fulfills the aerodynamic functionalities, and the impact resisting structure fulfills the structural requirements. This way, the aerodynamic surface of the invention is formed by an optimized structure for each one of the aerodynamic and structural functionalities.

The external shell can be shaped so as to provide Hybrid Laminar Flow Control (HLFC). For that, the external shell comprises a perforated outer skin, a perforated inner skin internally arranged with respect to the outer skin, and a plurality of suction chambers formed between the outer and inner skins and extending spanwise, such as the exterior region of the leading edge is communicated with an interior region of the leading edge through said suction chambers. Thus, apart from fulfilling aerodynamic requirements, the external shell may fulfil antierosion demands and provide Hybrid Laminar Flow Control (HLFC) functionality.

The impact resisting structure is specially configured for withstanding a bird strike. Thus, the front spar of the torsion box is prevented from being damaged, which means that the impact resisting structure is designed (calculated), such as in the event of a bird strike, said structure would act as a bumper protecting the front spar from any damage.

To finally form the aerodynamic surface, at least one of the external shell and the impact resisting structure is fitted with the upper and lower skins of the torsion box to thereby facilitate leading edge exchange. Thus, a wing, an HTP or a VTP with a detachable leading edge is provided.

The invention provides a two-part aerodynamic surface with dissociated functionalities, thus optimizing the performance of each functionality.

The invention offers a simple and cost-effective solution for the maintainability and reparability of leading edges, since the proposed leading edge can be easily replaced in a bird strike event.

Further, in case of HLFC aerodynamic surfaces, the HLFC functionality can be easily and economically maintain by just replacing the external shell.

Thus, some of the advantages of the invention are:
- Cost saving:
   o very low cost of an HLFC external shell due to the structural bird impact requirements are avoided,
   o the impact resisting capability is only provided to an internal structure, not to the entire leading edge,
- Plug and play in service solution. Only replacement of a cheap external shell, and in the worst case, the replacement of a detachable leading edge.
- Potential weight saving. Dedicated and optimized structures for each functionality of the leading edge.

### Brief description of the drawings

Preferred embodiments of the invention are henceforth described with reference to the accompanying drawings, in which:
Figure 1.- shows different views of conventional designs of leading edge sections with laminar flow control. Drawing (A) is a perspective view, drawing (B) is an enlarged view of a detail of drawing (A) according to a preferred embodiment, and drawing (C) is an enlarged view of a detail of drawing (A) according to another preferred embodiment.
Figure 2.- shows different schematic cross-sectional views of the aircraft aerodynamic surface according to the invention. Drawings (A), (B) and (C) show an aerodynamic surface having an impact resisting structure that comprises a rear and a front piece. Drawings (D) and (E) show an aircraft aerodynamic surface having an impact resisting structure formed by only one piece.
Figure 3.- shows different schematic cross-sectional views of different attachments possibilities between the leading edge, and the upper and lower skins of the torsion box of the aircraft.
Figure 4.- shows a multi-chamber configuration of a leading edge section of a wing or lifting surface with laminar flow control, wherein drawing (A) is a perspective view, and drawing (B) is an enlarged cross-sectional view of a drawing (A).

### Preferred embodiments of the invention

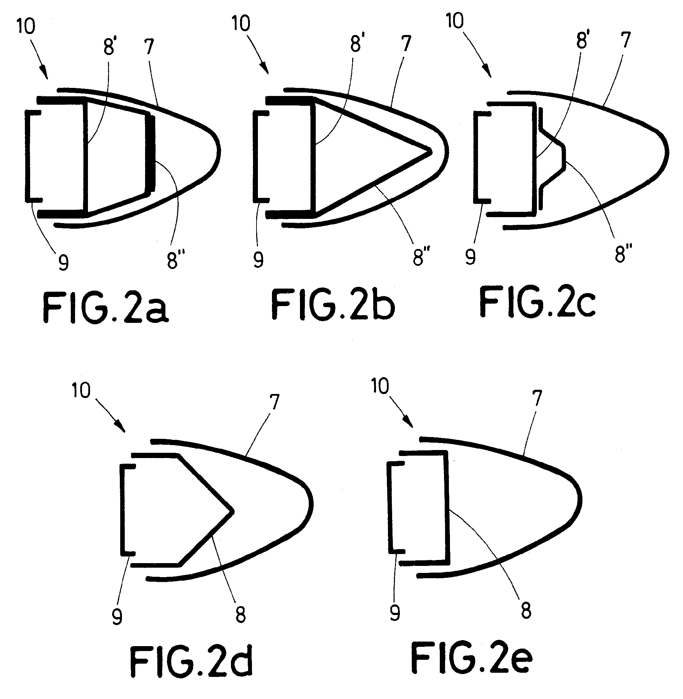

Figure 2 shows different embodiments of the aircraft aerodynamic surface of the invention.

Conventionally, the aircraft aerodynamic surface 10 comprises an upper skin 11, a lower skin 12, and a front spar 9. According to the invention, the aircraft aerodynamic surface 10 comprises a leading edge 1 formed by an external shell 7 and an impact resisting structure 8, wherein at least one of the external shell 7 and the impact resisting structure 8 is fitted with the upper and lower skins 11, 12 of the torsion box.

The impact resisting structure 8 is spanwise arranged between the external shell 7 and the front spar 9 of the torsion box, and is configured for absorbing a bird strike to prevent damage in the front spar 9 and withstand aerodynamic load.

Figures 2A, 2B and 2C show an aircraft aerodynamic surface 10 comprising an impact resisting structure 8 formed by a rear piece 8' and a front piece 8". The rear piece 8' is positioned near the front spar 9, and the front piece 8" near the external shell 7.

Providing a two-piece impact resisting structure 8, the invention provides a further protection against bird strikes. In a preferred embodiment, the front piece 8" is projected toward the external shell 7, covering most part of the space between the impact resisting structure 8 and the external shell 7. This way, a further structural protection is provided in the chord wise direction of the leading edge.

Figure 2A shows an aircraft aerodynamic surface 10 having an impact resisting structure 8 formed by a C-shaped profile rear piece 8' and an omega profile front piece 8".

Figure 2B shows an aircraft aerodynamic surface 10 having an impact resisting structure 8 formed by a C-shaped profile rear piece 8' and a triangular profile front piece 8".

Figure 2C shows an aircraft aerodynamic surface 10 having an impact resisting structure 8 formed by a C-shaped profile rear piece 8' and an omega profile front piece 8".

According to a preferred embodiment, the rear and the front pieces 8', 8" are both extended between the upper and the lower skins 11, 12, to reinforce the entire leading edge 1.

According to another preferred embodiment, the rear and the front pieces 8', 8" are joining together forming a unitary component. This way, the invention provides a more robust impact resisting structure 8.

Figures 2D and 2E show an aircraft aerodynamic surface 10 comprising an impact resisting structure 8 formed by one piece.

Figure 2D and 2E shows an aircraft aerodynamic surface 10 having an impact resisting structure 8 respectively having a triangular and C-shaped profile. In both cases, the impact resisting structure 8 is extended between the front spar 9 and the external shell 7 to cover most part of the space between the impact resisting structure 8 and the external shell 7.

According to the invention, at least one of the external shell 7 and the impact resisting structure 8 are fitted with the upper and lower skins 11, 12 of the torsion box to facilitate leading edge 1 exchange. This way, the invention provides an aerodynamic surface with a plug and play leading edge, which simplifies and reduces the costs of the leading edge exchange.

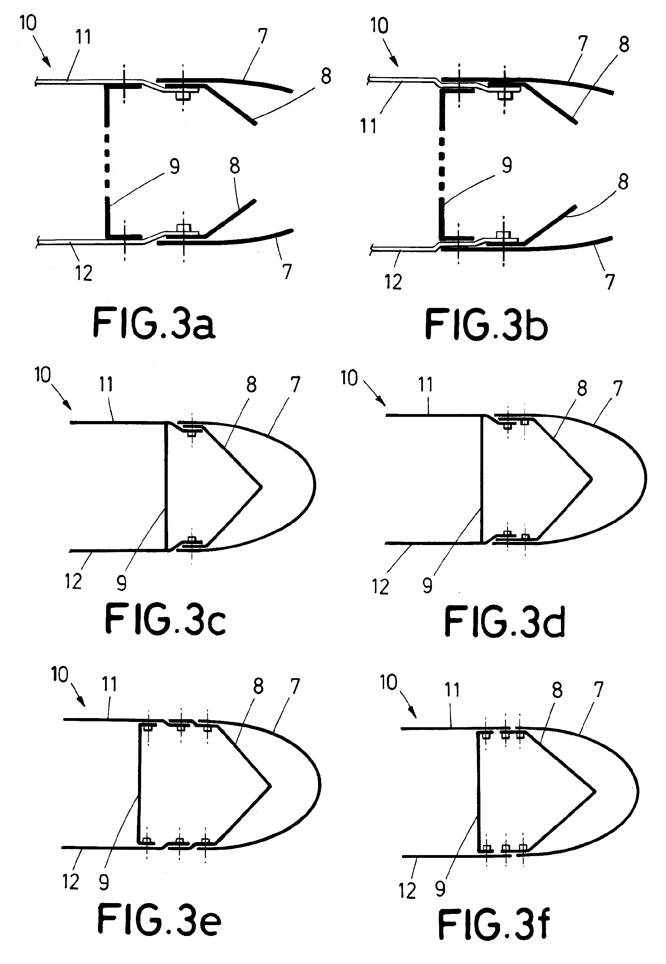

Figure 3 shows different attachments for the external shell 7, the impact resisting structure 8, the upper and lower skins 11, 12, and the front spar 9.

In Figures 3A, 3B, 3C and 3D the external shell 7 and the impact resisting structure 8 are fitted together with the upper and lower skins 11, 12 of the torsion box.

Figure 3A shows a preferred embodiment, wherein the front spar 9 is further fitted to the upper and lower skins 11, 12 of the torsion box. By fitting the leading edge 1 to an internal structural component of the torsion box, such as the front spar 9, the invention achieves a leading edge with a secure attachment.

Figure 3B shows an alternative preferred embodiment, wherein the external shell 7 is further coupled to both the front spar 9 and the upper and lower skins 11, 12 of the torsion box. This way, the leading edge is more firmly connected to the main body of the aerodynamic surface 10.

Figures 3C and 3D show alternative embodiments in which the front spar 9 is integrated in the torsion box, forming a piece with its upper and lower skins 11, 12.

Figure 3C shows an embodiment having only one attachment, in which the external shell 7 and the impact resisting structure 8 are fitted together with the upper and lower skins 11, 12 of the torsion box.

Figure 3D shows another embodiment having two attachments at each upper and lower skins 11, 12 of the torsion box, in which in a first attachment, the external shell 7 and the impact resisting structure 8 are fitted together, and in which in a second attachment, the external shell 7 and the impact resisting structure 8 are fitted together with the upper and lower skins 11, 12 of the torsion box.

When only one attachment is provided, this attachment has to be detachable, while when more than one attachment is provided, at least one of them has to be detachable.

Figures 3E and 3F show an alternative embodiment having three attachments, a first attachment in which the external shell 7 and the impact resisting structure 8 are fitted together, a second attachment in which the impact resisting structure 8 and the upper and lower skins 11, 12 are fitted together, and a third attachment in which the upper and lower skins 11, 12 and the front spar 9 are fitted together.

In Figures 3A-3E the attachments are formed by an outermost external shell 7, an intermediate impact resisting structure 8, and an inwardly positioned skin 11, 12. In Figure 3E where components are fitted by pairs, the above indicated scheme is also followed. As seen, the external shell 7 is exterior to the impact resisting structure 8, and said impact resisting structure 8 is exterior to the skins 11, 12.

Alternatively, In Figure 3F, the external shell 7 and the upper or lower skins 11, 12 are equally shaped, such that the attachment of the impact resisting structure 8 and the upper or lower skins 11, 12 are formed by an exterior skin and an inner impact resisting structure 8.

According to a preferred embodiment, the external shell 7 comprises a perforated outer skin 3, a perforated inner skin 5, and a plurality of suction chambers 2 formed between the outer and inner skins 3, 5.

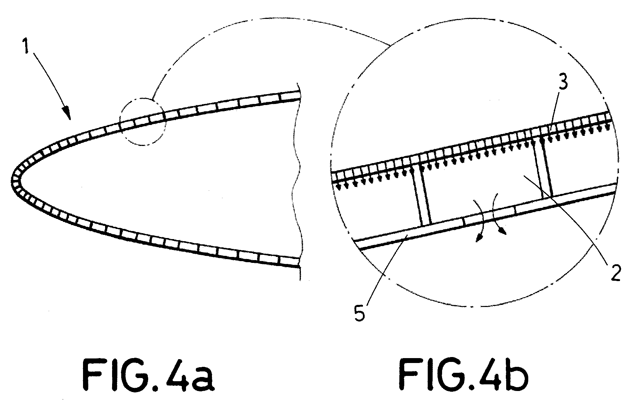

As shown in Figure 4, the outer and inner skins 3, 5 are shaped with an aerodynamic leading edge profile. The inner skin 5 is internally arranged with respect to the outer skin 3. The suction chambers 2 allow the exterior region of the leading edge 1 is communicated with an interior region of the leading edge 1. This way, the external shell 7 is configured for providing HLFC functionality.

HLFC configuration increases the aircraft performance and reduces fuel consumption, by reducing the aerodynamic drag on its surfaces.

Finally, according to another aspect of the present invention, the invention further comprises an aircraft comprising the aerodynamic surface 10 as described.

## Claims

1. An aircraft aerodynamic surface (10) comprising:
- a torsion box having an upper skin (11), a lower skin (12), and a front spar (9), and
- a leading edge (1) having an external shell (7) and an impact resisting structure (8),
- the external shell (7) being shaped with an aerodynamic leading edge profile,
- wherein the impact resisting structure (8) is spanwise arranged between the external shell (7) and the front spar (9),
- wherein said impact resisting structure (8) is configured for absorbing a bird strike to prevent damage in the front spar (9),
- and, wherein at least one of the external shell (7) and the impact resisting structure (8) is fitted together with the upper and lower skins (11, 12) of the torsion box to thereby facilitate leading edge (1) exchange.

2. An aircraft aerodynamic surface (10), according to claim 1, wherein the external shell (7) comprises:
- a perforated outer skin (3),
- a perforated inner skin (5) internally arranged with respect to the outer skin (3), and
- a plurality of suction chambers (2) formed between the outer and inner skins (3, 5), such as the exterior region of the leading edge (1) is communicated with an interior region of the leading edge (1) through said suction chambers (2).

3. An aircraft aerodynamic surface (10), according to any of the preceding claims, wherein the impact resisting structure (8) comprises a rear piece (8') and a front piece (8"), the rear piece (8') arranged close to the front spar (9), and the front piece (8") arranged close to the external shell (7).

4. An aircraft aerodynamic surface (10), according to claim 3, wherein the rear and the front pieces (8', 8") are both extended between the upper and the lower skins (11, 12) to provide a leading edge (1) reinforcement in a bird strike event.

5. An aircraft aerodynamic surface (10), according to any of claims 3-4, wherein the rear piece (8') has a C-shaped profile, and the front piece (8") has an omega, or a triangular, or a parallelepiped shaped profile projecting towards the external shell (7) covering most part of the space between the impact resisting structure (8) and the external shell (7).

6. An aircraft aerodynamic surface (10), according to any of claims 3-5, wherein the rear and the front pieces (8', 8") are joining together forming a unitary component.

7. An aircraft aerodynamic surface (10), according to claim 1, wherein the impact resisting structure (8) has a C-shaped or a triangular shaped profile projecting towards the external shell (7) covering most part of the space between the impact resisting structure (8) and the external shell (7).

8. An aircraft aerodynamic surface (10), according to any of preceding claims, wherein the front spar (9) is fitted to the upper and lower skins (11, 12) of the torsion box.

9. An aircraft aerodynamic surface (10), according to claim 8, wherein the external shell (7) is further fitted to both the front spar (9) and the upper and lower skins (11, 12) of the torsion box.

10. An aircraft aerodynamic surface (10), according to any of preceding claims, wherein the aerodynamic surface (10) is a wing, or a HTP, or a VTP.

11. An aircraft comprising an aerodynamic surface (10) according to any of the preceding claims.
